# EUROPEAN PATENT SPECIFICATION

(11) **EP 3 176 574 B1**
(45) Date of publication and mention of the grant of the patent: **27.01.2021**
(21) Application number: 15197454.0
(22) Date of filing: 02.12.2015
(51) Int. Cl.: G01N 27/414

(54) **A SENSOR APPARATUS AND ASSOCIATED METHODS**
SENSORVORRICHTUNG UND ZUGEHÖRIGE VERFAHREN
DÉTECTEUR ET PROCÉDÉS ASSOCIÉS

(43) Date of publication of application: 07.06.2017
(73) Proprietor: Emberion Oy, 02130 Espoo (FI)
(72) Inventor: Haque,, Samiul, Cambridge, CB4 1GN (GB); Colli,, Alan, Cambridge, CB4 3RG (GB)
(74) Representative: Boco IP Oy Ab

(56) References cited:
- DE-A1-102004 002 912
- US-A1- 2005 196 322
- US-A1- 2008 094 074
- ELIZA S A ET AL: "Modeling of floating gate AlGaN/GaN heterostructure-transistor based sensor", SEMICONDUCTOR DEVICE RESEARCH SYMPOSIUM, 2009. ISDRS '09. INTERNATIONAL, IEEE, PISCATAWAY, NJ, USA, 9 December 2009 (2009-12-09), pages 1-2, XP031919679, DOI: 10.1109/ISDRS.2009.5378008 ISBN: 978-1-4244-6030-4
- S. LAI ET AL: "Ultralow Voltage, OTFT-Based Sensor for Label-Free DNA Detection", ADVANCED MATERIALS, vol. 25, no. 1, 4 January 2013 (2013-01-04), pages 103-107, XP055222313, DE ISSN: 0935-9648, DOI: 10.1002/adma.201202996
- FABRIZIO ANTONIO VIOLA ET AL: "Flexible temperature sensors based on charge modulated organic thin film transistors", 2015 11TH CONFERENCE ON PH.D. RESEARCH IN MICROELECTRONICS AND ELECTRONICS (PRIME), 1 June 2015 (2015-06-01), pages 278-281, XP055271239, DOI: 10.1109/PRIME.2015.7251389 ISBN: 978-1-4799-8229-5

## Description

### Technical Field

The present disclosure relates particularly to sensors, associated methods and apparatus. Certain embodiments specifically concern an apparatus comprising a chemical and/or biological sensor. Some embodiments may relate to portable electronic devices, in particular, so-called hand-portable electronic devices which may be hand-held in use (although they may be placed in a cradle in use). Such hand-portable electronic devices include so-called Personal Digital Assistants (PDAs) and tablet PCs.

The portable electronic devices/apparatus according to one or more disclosed example aspects/embodiments may provide one or more audio/text/video communication functions (e.g. tele-communication, video-communication, and/or text transmission, Short Message Service (SMS)/ Multimedia Message Service (MMS)/emailing functions, interactive/non-interactive viewing functions (e.g. web-browsing, navigation, TV/program viewing functions), music recording/playing functions (e.g. MP3 or other format and/or (FM/AM) radio broadcast recording/playing), downloading/sending of data functions, image capture function (e.g. using a (e.g. in-built) digital camera), and gaming functions.

### Background

Research is currently being done to develop new sensor devices.

The article "Modeling of floating gate AIGaN/GaN heterostructure-transistor based sensor" (Eliza et al, Semiconductor Device Research Symposium, 2009. ISDRS '09, International, IEEE, Piscataway, NJ, USA, pages 1-2) presents an analytical model for the estimation of charge concentration in liquid or gas analyte or of the charges induced by biomolecules detected by an AIGaN/GaN High Electron Mobility Transistor (HEMT) based sensor.

The article "Ultralow Voltage, OTFT-Based Sensor for Label-Free DNA Detection" (Lai et al, Advanced Materials vol. 25, no. 1, 4 January 2013, pages 103-107) presents an organic ultralow voltage field effect transistor for DNA hybridization detection.

Document DE102004002912 discloses an apparatus for detecting substances in a fluid (6) comprises a pyrosensor containing a capacitor with a pyroelectric layer (31) between two electrodes.

Document US2005196322 discloses a detection apparatus which includes a pyroelectric transducer and one or more reagent concentrations deposited on the film.

### Summary

According to a first aspect, there is provided an apparatus comprising a pyroelectric layer, a two dimensional conductive channel and a floating gate, the apparatus configured such that the pyroelectric layer is capacitively configured with respect to each of the two dimensional conductive channel and the floating gate so that the two dimensional conductive channel and the floating gate can each act as respective capacitive plates for each respective, electrically connected, first and second portions of the pyroelectric layer, the respective first and second portions of the pyroelectric layer themselves configured to act as corresponding capacitive plates;
the floating gate comprising electrically connected first and second portions, the first portion of the floating gate being in thermal proximity to the first portion of the pyroelectric layer, the second portion of the floating gate configured to overlie and gate flow of electrical charge through the two dimensional conductive channel by charge in the second portion of the floating gate, wherein a dielectric layer is located between the two dimensional conductive channel and the second portion of the floating gate, and
wherein at least the first portion of the floating gate is functionalised to detect one or more proximal specific species, the detection of which gives rise to heat flow to or from the thermally proximal pyroelectric layer to allow the pyroelectric layer to generate an electrical signal dependent upon one or more of the presence and amount of the specific detected species.

At least the first portion of the floating gate is functionalised to detect one or more chemical and/or biological species, for example by anchoring/attaching/tethering/ conjugating/immobilizing a detector species to the exposed floating gate surface for reaction with a corresponding sample species.

The at least first portion of the floating gate may be functionalised to detect a plurality of different specific species.

The pyroelectric layer may be supported by two supporting legs at opposite sides of the pyroelectric layer to thermally isolate the pyroelectric layer.

The apparatus may comprise source and drain electrodes in electrical contact with the two dimensional conductive channel, the source and drain electrodes each connected between respective conductive paths associated with each of the supporting legs and the two dimensional conductive channel.

The apparatus may further comprise a border element located at the periphery of the pyroelectric layer, the border element configured to contain a liquid sample deposited on the apparatus. The border element may comprise a physical wall/barrier, or a (super)hydrophobic layer, for example.

The two dimensional conductive channel may comprise one or more of: graphene; graphene related materials (GRM), reduced graphene oxide, MOS₂, phosphorene, silicon nanowires, carbon nanotubes, and also hybrid structures containing a combination of materials.

The at least first portion of the floating gate may be functionalised by one or more of: an enzyme, cholesterol oxidase, chymotrypsin, glucose oxidase, catalase, penicillinase, trypsin, amylase, invertase, urease, and uricase. The first portion of the floating gate may be functionalised to react with a corresponding sample species comprising one or more of: a protein, cholesterol, an ester, glucose, hydrogen peroxide, penicillin, a peptide, starch, sucrose, urea, and uric acid. A highly sensitive calorimetric device can be provided, particularly in these example cases.

The first and second portions of the pyroelectric layer may be:
first and second portions of a common pyroelectric layer; or
respective separate electrically connected first and second pyroelectric layer elements.

That is, in some examples a single common pyroelectric layer/slab of material may be present in the apparatus, and in other example, at least two pyroelectric layers/slabs may be electrically connected together and used in an apparatus.

The area of the first portion of the floating gate may be one or more of: two times, three times, four times, five times, ten times, 20 times, 30 times, 50 times, 100 times and more than 100 times the area of the second portion of the floating gate.

At least the first portion of the floating gate may be functionalised by a proximal detector layer, and the detector layer may be configured to allow a plurality of reactions to take place with corresponding sample species. In some examples the detector layer may be configured to detect the same species over several separate sensing experiments/measurements, for example by comprising multiple layers of sensing species. In some examples the detector layer may be configured to detect different species over one or several separate sensing experiments/measurements, for example by comprising different types of detector species.

The apparatus may be electrically connected to and thermally isolated from a further such apparatus, apart from the at least first portion of the floating gate of the further apparatus not being functionalized. The apparatus and further apparatus together may be configured to form a potential divider.

A controlled photon source may be configured to provide photons of a wavelength corresponding to an expected absorption resonance of a specific detected species.

The apparatus may further comprise a filter coating configured to allow one or more specific wavelengths of light from the controlled photon source to reach the specific species (and thereby block the passage of one or more other specific wavelengths of light from reaching the specific species).

According to a further aspect, there is provided a method for detecting the presence of a specific species proximal to an apparatus by measuring the electrical signal from the apparatus. The method comprises:
for an apparatus comprising a pyroelectric layer, a two dimensional conductive channel and a floating gate, the apparatus configured such that the pyroelectric layer is capacitively configured with respect to each of the two dimensional conductive channel and the floating gate so that the two dimensional conductive channel and the floating gate can each act as respective capacitive plates for each respective, electrically connected, first and second portions of the pyroelectric layer, the respective first and second portions of the pyroelectric layer themselves configured to act as corresponding capacitive plates, the floating gate comprising electrically connected first and second portions, the first portion of the floating gate being in thermal proximity to the first portion of the pyroelectric layer, the second portion of the floating gate configured to overlie and gate flow of electrical charge through the two dimensional conductive channel by charge in the second portion of the floating gate, wherein a dielectric layer is located between the two dimensional conductive channel and the second portion of the floating gate, wherein at least the first portion of the floating gate is functionalised to detect one or more proximal specific species, the detection of which gives rise to heat flow to or from the thermally proximal pyroelectric layer to allow the pyroelectric layer to generate an electrical signal dependent upon one or more of the presence and amount of the specific detected species.

The steps of any method disclosed herein do not have to be performed in the exact order disclosed, unless explicitly stated or understood by the skilled person.

Corresponding computer programs for implementing one or more steps of the methods disclosed herein are also within the present disclosure.

In a further example not according to the present invention there is provided a computer readable medium comprising computer program code stored thereon, the computer readable medium and computer program code being configured to, when run on at least one processor, control the operation of an apparatus, the apparatus comprising:
a pyroelectric layer, a two dimensional conductive channel and a floating gate, the apparatus configured such that the pyroelectric layer is capacitively configured with respect to each of the two dimensional conductive channel and the floating gate so that the two dimensional conductive channel and the floating gate can each act as respective capacitive plates for each respective, electrically connected, first and second portions of the pyroelectric layer, the respective first and second portions of the pyroelectric layer themselves configured to act as corresponding capacitive plates,
the floating gate comprising electrically connected first and second portions, wherein a dielectric layer is located between the two dimensional conductive channel and the second portion of the floating gate, the first portion of the floating gate being in thermal proximity to the first portion of the pyroelectric layer, the second portion of the floating gate configured to overlie and gate flow of electrical charge through the two dimensional conductive channel by charge in the second portion of the floating gate,
wherein at least the first portion of the floating gate is functionalised to detect one or more proximal specific species, the detection of which gives rise to heat flow to or from the thermally proximal pyroelectric layer to allow the pyroelectric layer to generate an electrical signal dependent upon one or more of the presence and amount of the specific detected species;
the control providing for:
   detection of the presence of a specific species proximal to the apparatus
   by measuring the electrical signal from the apparatus.

One or more of the computer programs may, when run on a computer, cause the computer to configure any apparatus or device disclosed herein or perform any method disclosed herein. One or more of the computer programs may be software implementations, and the computer may be considered as any appropriate hardware, including a digital signal processor, a microcontroller, and an implementation in read only memory (ROM), erasable programmable read only memory (EPROM) or electronically erasable programmable read only memory (EEPROM), as non-limiting examples. The software may be an assembly program.

One or more of the computer programs may be provided on a computer readable medium, which may be a physical computer readable medium such as a disc or a memory device, or may be embodied as a transient signal. Such a transient signal may be a network download, including an internet download.

The above summary is intended to be merely exemplary and non-limiting.

### Brief Description of the Figures

A description is now given, by way of example only, with reference to the accompanying drawings, in which:-
Figure 1a shows an apparatus according to examples described herein;
Figure 1b shows a cross section through a portion of the apparatus of Figure 1a;
Figure 2 shows an equivalent schematic circuit diagram for the apparatus of Figure 1a;
Figure 3 shows an example graph of current versus time measured from an apparatus as shown in Figure 1a;
Figure 4 shows a schematic example of a functionalised first portion of a floating gate according to examples described herein;
Figure 5 shows a further apparatus according to examples described herein;
Figure 6 shows a method according to examples described herein; and
Figure 7 shows a computer-readable medium comprising a computer program configured to perform, control or enable a method described herein.

### Description of Specific Aspects/Embodiments

In conventional biosensing technology, temperature changes may be determined using thermistors at the ends of packed bed columns containing immobilised enzymes at a constant temperature. Using such a system up to 80% of the heat generated in a reaction between a sample and the detector species in the packed bed columns may be registered as a temperature change in the sample stream. The temperature change can be calculated from the enthalpy change and the amount of sample reacted. For example, if a 1 mM reactant/sample is completely converted to product in a reaction generating 100 kJ mole⁻¹ then each ml of sample solution generates 0.1 J of heat. At 80% efficiency, this will cause a change in temperature of around 0.02°C. This level of temperature change is typical of biological reactions, and requires a detector temperature resolution of 0.0001°C for the biosensor to be generally useful.

The heat output (molar enthalpies) of some example enzyme catalysed reactions are as follows:

| **Reactant** | **Enzyme** | **Heat output** -□**H (kJ mole⁻¹)** |
|---|---|---|
| Cholesterol | Cholesterol oxidase | 53 |
| Esters | Chymotrypsin | 4 - 16 |
| Glucose | Glucose oxidase | 80 |
| Hydrogen peroxide | Catalase | 100 |
| Penicillin G | Penicillinase | 67 |
| Peptides | Trypsin | 10 - 30 |
| Starch | Amylase | 8 |
| Sucrose | Invertase | 20 |
| Urea | Urease | 61 |
| Uric acid | Uricase | 49 |

It can be seen that a particular reactant/sample and enzyme/detector pair reacts with a particular heat output. Thus, if the heat output is accurately determined, then the nature of the reaction can be determined.

Conventional calorimetric sensors often use hotplates or chemical reactions, where thermistors are used to detect the difference in temperature. The detection of the change in temperature can be limited by the thermistor sensitivities. By using a pyroelectric device, the detection sensitivity may be significantly improved.

Calorimetric biosensor may also encounter difficulties in closely matching the characteristic temperature constants of the measurement and reference thermistors. An equal movement of only 1°C in the background temperature of both thermistors can cause an apparent change in the relative resistances of the thermistors equivalent to 0.01°C, which in many cases is a temperature change as large as the temperature change trying to be detected due to a reaction. It is clearly of great importance that environmental temperature changes are avoided as far as possible.

Isothermal microcalorimetry (IMC) is a laboratory method for real-time monitoring and dynamic analysis of chemical, physical and biological processes. Over a period of hours or days, IMC can be used to determine the onset, rate, extent and energetics of processes for specimens in small ampoules (e.g. 3-20 ml) at a constant set temperature (around 15°C-150°C). However, this can be a cumbersome process and does not reliably provide high level accuracy and high resolution detection within a short period of time (e.g., a few seconds).

There will now be described an apparatus and associated methods that may address one or more of the abovementioned issues.

Apparatus disclosed herein may be considered to provide a way of performing chemical and/or biological analysis using calorimetric principles. A two-dimensional conductive channel (for example, a graphene channel) is used in an individual pyroelectric detector/apparatus. A "floating gate" structure is used, where a portion of the apparatus is functionalized to trigger a chemical or biological reaction and transduce the resulting release of heat with area-dependent gain. Also described in a method to actively probe the occurrence of a reaction by, for example, illuminating the system with a controlled source of photons.

The apparatus 100 uses a calorimetric transducer based on a field effect transistor fabricated on a pyroelectric material. To obtain a high temperature change sensitivity, in some examples the apparatus may be fabricated on a "suspended" apparatus comprising a thin pyroelectric layer mounted on two support members/legs to help ensure that, for a fixed amount of heat delivered to the apparatus (by a reaction taking place on the apparatus), the resulting temperature change predominantly occurs within the apparatus and is induced in the apparatus due to its small thermal mass and low thermal conductivity to the substrate.

The sensing mechanism relies on the production/absorption of heat (i.e. heating or cooling). The heat is delivered by a chemical or biological reaction which occurs when a particular analyte (sample species) is present in the sample under consideration. To efficiently deliver the heat to the pyroelectric layer of the apparatus, the reaction takes place on the apparatus itself. If a large proportion (e.g., 80% or more) of the surface of the pyroelectric layer is overlaid with a conductive floating layer/gate/pad, then the reaction should take place on the pad. In order to achieve this, the pad is functionalised or "activated" by the presence of detector species (e.g., enzymes in the case of a biological reaction) to trigger the reaction with the analyte/sample species sought. The reaction may be, for example, a chemical binding, a chemical dissociation, a redox reaction, or other reaction; the only requirement is that the reaction brings about a hear transfer (i.e. it is exothermal or endothermal) so that the heat can be transferred to the pyroelectric substrate via the pad and provide a temperature change.

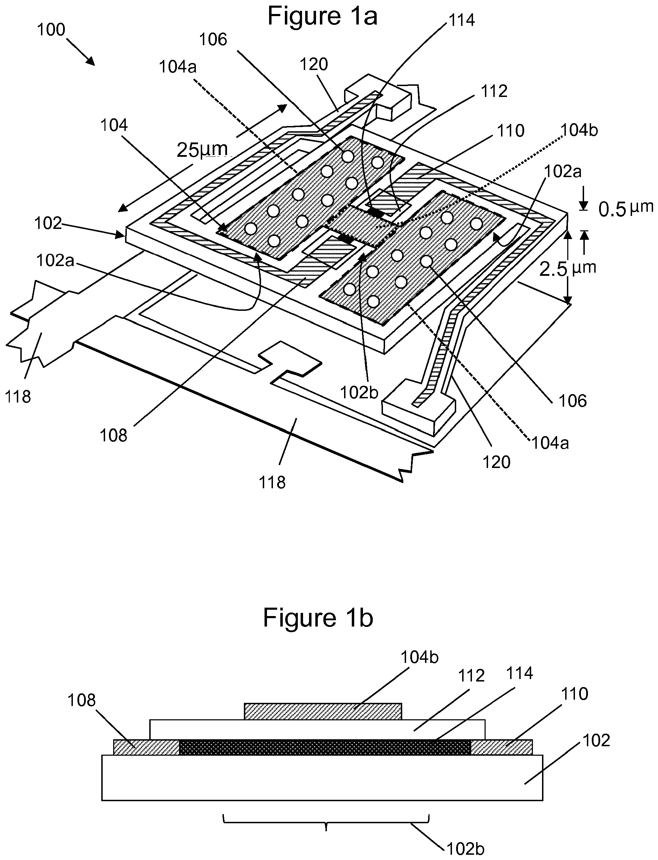

Figure 1 illustrates an example apparatus 100. Such an apparatus may also be called a pixel in that it is a standalone sensing element. A plurality of pixels may be connected together and used as a sensing array in some examples (one or more (e.g. groups of) pixels in the array may or may not be configured to be functionalised with respect to the same or different proximal species). The apparatus of each pixel may in some examples have an uppermost surface area of around 20x20=400µm². The pyroelectric layer may in some examples have a thickness of around 0.5 µm. The apparatus may be supported off an underlying substrate at a distance of around 2.5µm. The apparatus 100 comprises a pyroelectric layer 102, a two dimensional conductive channel 114 and a floating gate 104. The two dimensional conductive channel 114 may comprise one or more of graphene; graphene related materials (GRM); reduced graphene oxide, MOS₂, phosphorene, silicon nanowires, carbon nanotubes, and also hybrid structures containing a combination of materials. In this example the floating gate 104 comprises two first portions 104a, and a second portion 104b, which are electrically connected in an "H" shape, with the second portion 104b forming the cross-bar of the "H". Of course other geometries may be used.

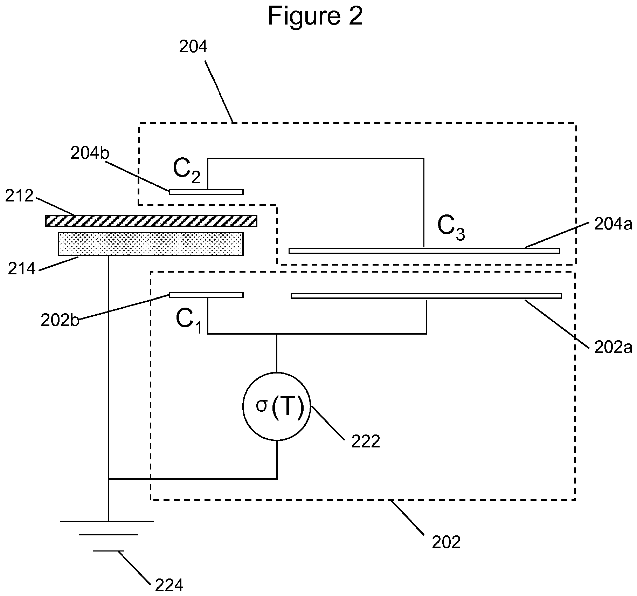

In this embodiment the first portions 104a of the floating gate 104 are directly overlying (and in physical contact with) the first portions 102a of the pyroelectric layer 102, i.e. they are in thermal proximity to the first portions 102a of the pyroelectric layer 102. The physical contact/thermal proximity between the floating gate and pyroelectric layer here acts to facilitate efficient heat transfer from the functionalised floating gate 104 on which a reaction takes place with a sample species, and the pyroelectric layer 102 which changes its physical properties due to a change in temperature/heat transfer. The arrangement of the first portion 104a of the floating gate 104 directly overlying the first portion 102a of the pyroelectric layer 102 forms a capacitor (see Figure 2).

A charge build-up at the surface of the pyroelectric layer 102, 202, for example due to a change in temperature of the pyroelectric layer 102, 202, cannot flow from the pyroelectric layer 102, 202 to the first portion 104a, 204a of the floating gate 104, 204 because the built-up charges are bound to the pyroelectric layer 102, 202. Thus the pyroelectric layer acts as a first plate of a capacitor C₃, as well as a dielectric/insulator of the capacitor C₃ because the flow of (bound) charge from the pyroelectric layer 102, 202 is prevented due to the nature of the charges in the pyroelectric layer 102, 202. The first portion 104a, 204a of the floating gate 104, 204 acts as a second capacitor plate C₃.

A second portion 104b, 204b of the floating gate 104, 204 is configured to overlie the second portion 102b, 202b of the pyroelectric layer 102, 202, and is configured to overlie and gate flow of electrical charge through the two dimensional conductive channel 114, 214 by charge in the second portion 104b, 204b of the floating gate 104, 204. Between the second portion 104b, 204b of the floating gate 104, 204 and the second portion 102b, 202b of the pyroelectric layer 102, 202 are located a two dimensional conductive channel 114, 214 and a dielectric layer 112, 212.

Figure 1b shows a cross section through the centre of the apparatus 100 in the region of the second portion 104b of the floating gate 104. It can be seen that the two dimensional conductive channel 114 directly overlies the second portion 102b of the pyroelectric layer 102, and the dielectric layer 112 is located between the two dimensional conductive channel 114 and the overlying second portion 104b of the floating gate 104. Also shown are source and drain contacts 108, 110 with the two dimensional conductive channel 114 located therebetween.

Again with reference to Figure 2, the dielectric layer 112, 212 prevents direct electrical contact between the second portion 104b, 204b of the floating gate 104, 204 and the underlying two dimensional conductive channel 114, 214, thereby forming a capacitor arrangement C₂ with the dielectric layer 112, 212 acting as a dielectric/insulator between the conductive second portion 104b, 204b of the floating gate 104, 204 (a first plate of the capacitor C₂) and the underlying two dimensional conductive channel 114, 214 (a second plate of the capacitor C₂).

The arrangement of the two dimensional conductive channel 114, 214 directly overlying the second portion 102b, 202b of the pyroelectric layer 102, 202 also forms a capacitor C₁. A charge build-up at the surface of the pyroelectric layer 102, 202 cannot flow from the pyroelectric layer 102, 202 to the two dimensional conductive channel 114, 214 because the built-up charges are bound to the pyroelectric layer 102, 202. Thus the pyroelectric layer 102, 202 acts as a first plate of a capacitor C₁, as well as a dielectric/insulator. The two dimensional conductive channel 114, 214 acts as a second capacitor plate of capacitor C₁.

Therefore, it can be said that the apparatus 100 is configured such that the pyroelectric layer 102, 202 is capacitively configured with respect to each of the two dimensional conductive channel 114, 214 and the floating gate 104, 204 so that the two dimensional conductive channel 114, 214 and the floating gate 104, 204 can each act as respective capacitive plates for each respective, electrically connected, first 102a, 202a and second 102b, 202b portions of the pyroelectric layer 102, 202. The respective first 102a, 202a and second 102b, 202b portions of the pyroelectric layer 102, 202 are themselves configured to act as corresponding capacitive plates. In this example, the pyroelectric layer 102, 202 is notionally divided into a first portion 102a, 202a which underlies the floating gate 104, 204 (in particular, directly underlies the first portion 104a, 204a of the floating gate 104, 204) and a second portion 102b, 202b which underlies the two dimensional conductive channel 114, 214 (in the central region of the apparatus 100 as shown in Figure 1).

At least the first portion 104a of the floating gate 104 is functionalised to detect one or more proximal specific species. The detection of specific species, such as species present in a liquid sample deposited on the apparatus 100 or gaseous species present in the atmosphere/environment around the apparatus 100, involves the specific species interacting with the detector species used to functionalise the floating gate 104. The reactions give rise to heat flow to or from the thermally proximal pyroelectric layer 102. This heat flow ultimately allows the pyroelectric layer 102 to generate an electrical signal dependent upon one or more of the presence and amount of the specific detected species.

The functionalisation may be present as one or more detector species attached to at least the first portion 104a of the floating gate 104. For example, one or more of: an enzyme, cholesterol oxidase, chymotrypsin, glucose oxidase, catalase, penicillinase, trypsin, amylase, invertase, urease, and uricase may be attached to the first portion 104a of the floating gate 104 for reaction with a corresponding sample species. Such sample species include, for example: a protein, cholesterol, an ester, glucose, hydrogen peroxide, penicillin, a peptide, starch, sucrose, urea, and uric acid. A highly sensitive calorimetric apparatus can be provided particularly in these use cases.

In the example shown in Figure 1 the functionalisation is illustrated schematically by detector species 106 bound to the upper surface of the floating gate 104 (for example, each functionalisation region 106 may be imagined to be a particular detector species grafted/anchored to the floating gate 104 surface).

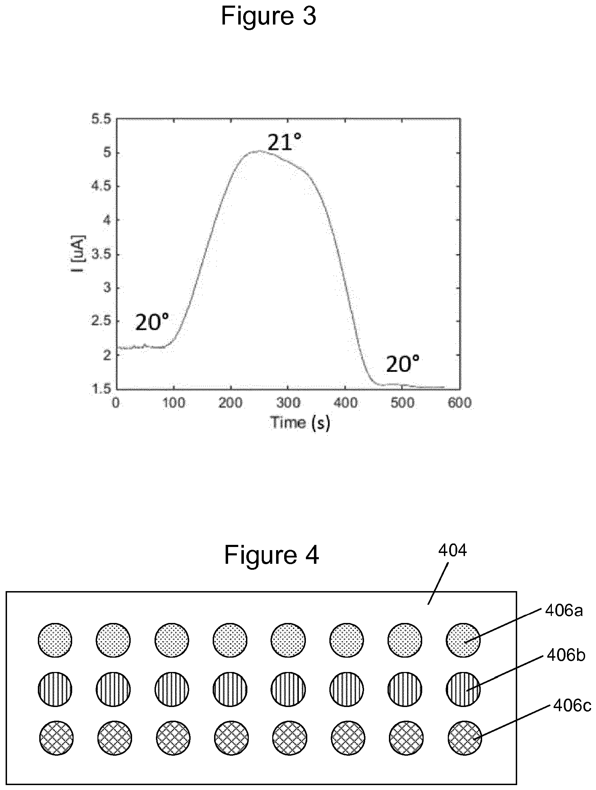

In some example, one type of detector species 106 may be used for an apparatus 100 which is sensitive to one particular sample species. In other examples, different types of detector species 106 may be used for an apparatus 100 which is sensitive to sensing a plurality of different particular sample species. This is illustrated schematically in Figure 4, in which three types of detector species 406a, 406b and 406c are arranged on the surface of the floating gate 404, each configured to detect a particular sample species. Such an apparatus configured to detect more than one type of sample species may be termed a "multi-parametric (bio)sensor". Each detector species 406a, 406b and 406c may represent a different detector species bound to a floating gate.

In some examples, there may be an array of interconnected apparatus 100 and figure 4 may be taken to schematically represent different apparatus 100 each functionalized with a particular detector molecule/receptor. In some examples each apparatus 100 in the array may be functionalised in the same way. In other examples there may be different apparatuses functionalised in different ways to respond to different sample species. A response to detecting a reaction for such an array of apparatus 100 may be measured as the net temperature change over the whole array when a specific sample molecule interacts with the separate apparatus 100 (or a plurality of specific molecules interact with correspondingly functionalised apparatuses 100).

In some examples the at least a first portion 104a of the floating gate 104 may be functionalised by a proximal detector layer. Such a layer may in some examples comprise a multilayer thickness of detector molecules overlaying the floating gate 104 to allow for multiple reaction events to take place using the apparatus 100. Such a detector layer may be configured to allow only one type of sample species to be detected (if only one type of detector molecule is present in the detector layer). In other examples the detector layer may be configured to allow for a plurality of different reactions to take place with corresponding sample species (for example if different regions of the detector layer comprise different detector species configured to react with different particular sample species). For an example comprising a detector layer of multilayer thickness, the apparatus 100 may be used a plurality of times by, for example, performing a sensing experiment which consumes an upper layer of the detector layer, then removing the used upper layer to reveal a fresh sensing layer underneath for a subsequent sensing experiment.

The apparatus 100 in Figure 1 is arranged such that the pyroelectric layer 102 is supported by two supporting legs 120 at opposite sides (in this example at diagonally opposite corners) of the pyroelectric layer 102. By suspending/supporting the apparatus 100 away from an underlying substrate to thermally isolate the pyroelectric layer 102 (for example, without the supporting legs 120) the apparatus 100 would be resting on a surface with the bottom surface of the pyroelectric layer 102 in substantially full contact with the underlying surface. Such thermal isolation improves measurement accuracy by reducing any change in temperature being detected which is not due to detection of a specific sample species (for example, by environmental temperature changes heating/cooling the surface which would also change the temperature of the apparatus if it was in substantially full contact with the surface, or by heat transfer due to the detection of a specific sample species being further transferred away from the apparatus to the underlying surface).

In some examples, the apparatus 100 may further comprise a border element (not shown) located at the periphery of the apparatus 100 or at the periphery of the pyroelectric layer 102. The border element may be configured to contain a liquid sample deposited on the apparatus 100 and prevent it running off the surface of the apparatus 100. For example, if water-based solutions containing sample species were to be analysed using the apparatus, then a hydrophobic or superhydrophobic layer may be located as a border element around the outside of the upper surface of the pyroelectric layer 102 to prevent the water-based solution running off the sides of the apparatus 100. As another example, a physical border element, such as a wall, texturing, or other physical barrier element/container may be present to contain a liquid sample on the sensing (upper) surface of the apparatus 100.

In this example the first 102a and second 102b portions of the pyroelectric layer 102 are first and second portions 102a, 102b of a common pyroelectric layer 102. In other examples the first 102a and second 102b portions of the pyroelectric layer 102 may be respective separate electrically connected first and second pyroelectric layer elements.

When a sample species reacts with a detector species 106 anchored/attached to a conductive first portion/region of the floating gate 104a, a reaction takes place which results in a transfer of heat (an increase in heat energy transferred to the apparatus for an exothermic reaction, or a increase in heat energy transferred away from the apparatus for an endothermic reaction). For an exothermic reaction, the heat transfer is away from the reaction site into the attached first portion 104a of the floating gate 104, and from there into the underlying pyroelectric layer 102, thereby increasing the temperature of the pyroelectric layer 102. For an endothermic reaction, the heat transfer is towards the reaction site from the attached first portion 104a of the floating gate 104, in turn from the underlying pyroelectric layer 102, thereby decreasing the temperature of the pyroelectric layer 102.

When the pyroelectric layer 102 undergoes a change in temperature its crystal structure changes, giving rise to a spontaneous internal separation of change (charge polarisation) within the pyroelectric crystal 102. This charge separation is bound, meaning that the charges which arise are not free to flow but are bound/fixed within the crystal structure of the pyroelectric layer 102. The charge separation causes a surface charge density and a corresponding electric field to form at the surface of the pyroelectric layer 102 proximal to the overlying floating gate 104.

Because the surface charge density at the surface of the pyroelectric layer 102 is bound, the overlying first portion 104a of the floating gate 104, can be in direct physical contact with the (insulating) associated first portion 102a of the pyroelectric layer 102 and a current cannot flow in-between because the charged species are not free to flow (i.e. there is no electrical short if the first portion 104a of the floating gate 104 is directly in contact with the first portion 102a of the pyroelectric layer 102). The pyroelectric layer 102 and the overlying first portion 104a of the floating gate 104 act as a capacitor, which behaves as if there is an insulating layer between the pyroelectric layer (one plate of the capacitor) and the first portion 104a of the floating gate 104 (the other plate of the capacitor) even though the two layers 102; 104a, are in direct contact, because the bound charge cannot flow between the pyroelectric layer 102 and the first portion 104a of the floating gate 104.

The first portion 104a of the floating gate 104 acts to screen the surface charges present at the surface of the pyroelectric layer 102 (that is, the first portion 104a of the floating gate 104 acts to balance out the charge "imbalance" due to the surface charge density) by opposite charges moving towards the underlying surface of the first portion 104a of the floating gate 104 closest to the pyroelectric layer 102 (the "inside" surface of the capacitor). The first portion 104a of the floating gate 104 is electrically isolated other than an electrical connection to the second portion 104b of the floating gate 104. Thus for charges to form at the first portion 104a of the floating gate 104 to balance out the surface charge density at the pyroelectric layer 102, the first portion 104a of the floating gate 104 draws charge from the second portion 104b of the floating gate 104 as this is the only charge reservoir available. The second portion 104b of the floating gate 104 also acts effectively like a capacitor plate in this apparatus, the capacitor being formed from the second portion 104b of the floating gate 104 as a first plate, and the two dimensional conductive channel 114 as a second plate, with a dielectric layer 112 in-between to prevent direction electrical contact between the (conducting) second portion 104b of the floating gate 104 and the two dimensional conductive channel 114.

Because charge has been drawn from the second portion 104b of the floating gate 104 by the first portion 104a of the floating gate 104, the capacitor formed from the first portion 104a of the floating gate 104 and the two dimensional conductive channel 114 acts to balance the change in charge by drawing charge from the two dimensional conductive channel 114. The two dimensional conductive channel 114 is in electrical contact with source and drain contacts 108, 110, and thus an electrical current flows between the source and drain contacts 108, 110 as charge is drawn from the two dimensional conductive channel 114. Thus, overall, the apparatus 100 is configured such that the reaction of a sample species with a detector species gates the channel 114 of the apparatus 100. The resulting current flow can be measured using external contacts 118 connected to the source and drain electrodes 108, 110.

If there was no two dimensional conductive channel 114 from which to draw charge, then the first portion 104a of the floating gate 104, would draw charge from the second portion 104b of the floating gate 104 acting as a capacitive plate with the surrounding air (i.e. the second portion 104b of the floating gate 104 would act as a one-plate capacitor). In principle in the apparatus 100, an electrical field forms at the second portion 104b of the floating gate 104 with the surrounding air. However, because of the two dimensional conductive channel 114 which forms a parallel plate capacitor with the second portion 104b of the floating gate 104, the capacitance of the "one-plate capacitor" of the second portion 104b of the floating gate 104 with the air is negligible, and charge is drawn from the two dimensional conductive channel 114.

Consider the circuit diagram in Figure 2 representing the apparatus of Figure 1a. The pyroelectric layer 202 provides two possible capacitor plates 202a, 202b for capacitor C₃ and capacitor C₁ respectively (and the associated intervening insulating layer of the capacitor due to charge building up at the pyroelectric layer surface being bound to the pyroelectric layer and thus unable to flow as free charge). The two dimensional conductive channel 214 is also illustrated and provides a capacitor plate 214 for capacitors C₁ and C₂. The first portion 204a and the second portion 204b of the floating gate 204 each form a complementary capacitor plate 204a, 204b. The first portion 204a of the floating gate 204 forms a capacitor plate 204a with the capacitor plate 202a provided by the pyroelectric layer 202 to form a capacitor C₃. The second portion 204b of the floating gate 204 forms a capacitor plate 204b with the capacitor plate 214 provided by the two dimensional conductive channel 214 having a dielectric layer 212 in between to form a capacitor C₂.

If there was no dielectric 212 present in the apparatus to electrically separate the second portion 204b of the floating gate 204 from the two dimensional conductive channel 214 then the apparatus would only have a capacitance due to the capacitor C₁ formed by the capacitor plate 202b provided by the pyroelectric layer 202 and the capacitor plate 214 provided by the two dimensional conductive channel 214.

At a particular temperature, the pyroelectric layer 202 produces a fixed amount of charge per unit area, indicated as σ(T) 222. The electrostatic potential V₃ generated at C₃ does not depend on the geometry of C₃ (V₃ = Q₃/C₃ with Q3 = Δ(T) x Area(C₃). If the area of C₃ doubles, both Q₃ and C₃ double and V₃ stays constant). However, the charge Q₃ needed at C₃ to screen/balance the pyroelectric charge comes from C₂, because the second portion 204b of the floating gate 204 forming a plate of the capacitor C₂ is a "floating" gate with no access to an external charge reservoir. For capacitors in series, Q₂ = Q₃, and therefore the gate potential applied to the two dimensional conductive channel 214 is V2 = Q2/C2 = Q3/C2 = V₃ x C3/C2. So, the apparatus acts to amplify the natural gate voltage V1 at capacitor C₁ with an additional gate voltage V2 that scales with the capacitance ratio C₃/C₂. If the area of the first portion 204a of the floating gate 204 forming the capacitor plate 204a in direct contact with the pyroelectric substrate 202 is much larger than the overlap of the second portion 204b of the floating gate 204 with the two dimensional conductive channel 214, a large C₃/C₂ ratio, and a corresponding high temperature change sensitivity, is achieved.

Therefore better sensitivity to temperature change is achieved by increasing the ratio of C₃ to C₂; that is by having a very small overlap of second portion 204b of the floating gate 204 with the two dimensional conductive channel 214 to form the capacitor C₂, and a very large first portion 204a of the floating gate 204 forming the capacitor plate 204a, covering as much of the surface of the pyroelectric layer 202 as possible, to form the capacitor C₃.

Thus in some examples, the area of the first portion 104a, 204a of the floating gate 104, 204 may be one or more of: two times, three times, four times, five times, ten times, 20 times, 30 times, 50 times, 100 times and more than 100 times the area of the second portion 104b, 204b of the floating gate 104, 204. Theoretically, the larger the ratio of the area of the first portion 104a, 204a to the area of the second portion 104b, 204b is, the greater the "voltage amplification" effect of the apparatus 100 and the more sensitive the apparatus 100 is to changes in temperature.

The apparatus 100 may be considered to be a sensing pixel. A great advantage of calorimetric sensors based on pyroelectric materials such as apparatus 100 described above is that the sensitivity scales with the area of the apparatus 100. While the temperature change induced in the apparatus 100 does not differ if one doubles its area (there is twice as much energy delivered to heat twice as much mass), the charge collected by the floating gate pad 104, 204 doubles, and thus the resistance change in the two dimensional conductive channel 114, 214 also doubles. One can thus increase the sensitivity (almost) at will at the expense of device area. For a chemical sensor or biosensor as described above, a single apparatus the size of a liquid droplet is perfectly realistic.

The inventors have experimentally measured that for a 300µm x 300µm apparatus on z-cut LiNbO₃ the thermal coefficient of resistance (TCR) can reach values up to 150 %/K as shown in Figure 3 which illustrates a change in current with time during a temperature change of an apparatus between 20° and 21. With a noise floor of about 0.5%, with the apparatus a minimum ΔT of ∼0.005°C could be detected. Therefore to reach a 0.0001°C resolution required the area needs to be increased by 50 times, i.e., using an apparatus 2.1mm x 2.1mm in size. Such a size is still perfectly compatible with biosensing and chemical sensing applications.

The floating gate 104, 204 may be electrically conductive (e.g., so that it can act as a capacitor plate) and at the same time offer a good anchor point for receptor/detector species functionalization. For some reactions/receptors, metals such as gold, platinum and AgCI or other conductive materials such as graphene are suitable. If the desired receptor/detector species does not bind, or does not bind well, directly to the floating gate, then the floating gate may be coated a suitable buffer layer in order to increase the adhesion of the detector species to the floating gate pad. The buffer layer should not increase the overall thermal mass of the apparatus too much and should also possess good thermal conductivity to allow heat transfer between the reacting detector and sample species and the pyroelectric layer 102, 202 of the apparatus 100. For some reactions, a charge transfer may occur between the reactants (i.e. sample and detector species) and the floating gate. Charge transfer into or out from the floating gate should be avoided to maintain a system acting as capacitive elements as illustrated in Figure 2. To prevent charge transfer to/from the floating gate 104. 204, a thin insulating barrier may be deposited on the floating gate 104, 204.

The table below indicates some pyroelectric materials which may be suitable for use in apparatus as described here for the pyroelectric layer 102, 202. The choice of the pyroelectric material 102, 202 may be important for good operation of the apparatus. The table below shows some properties of common pyroelectric materials. A high pyroelectric coefficient may be desirable for high sensitivity, but one must also take into account other important features such as low internal leakage, and possible compatibility with CMOS electronics (e.g., aluminium nitride AIN exhibits a poor pyroelectric coefficient, but it is a highly compatible material with Si processing).

| *Substrate material* | *Pyroelectric coefficient (µC m⁻² K^{- 1})* | *Implementation and cost* | *Internal discharge* |
|---|---|---|---|
| LiTaO3 | 230 | Crystal film (costly) | Low |
| LiNbO3 | 120 | Crystal film (costly) | Low |
| AlN | 8 | Crystal film (less costly) | Low |
| ZnO | 7 | Crystal film (less costly) | High |
| PVDF | 27 | Flexible thin sheet (cheap) | Low |
| HydroFluoro-Graphene | Unknown, but theory suggests > 0 | 2D materials system (eventually cheap) | Unknown |

Apparatus as described herein have been experimentally tested to operate reliably over a period of several minutes and so are able to operate in DC mode and are suitable for monitoring "slow" reactions, such as biological reactions which can occur over a minute or more.

In some examples, the apparatus may be considered to be configured such that the "amplification" portion of the apparatus (i.e. the two dimensional conductive channel region 114, 214 shown in cross section in Figure 1b) is integrated directly with the pyroelectric layer, rather than being a separate but attached element. While for a single-apparatus device (i.e. one apparatus) the cost-effectiveness importance is moderate, the apparatus architecture described herein provides advantages for medium-sized arrays (between around 20 to around 100 apparatus in an array) and larger. As many (bio)sensing solutions aim at multi-parametric analysis, namely that several analytes/samples are tested at the same time, the apparatus described herein can perform such multi-sample species detection. As described, the apparatus can be tailored to undergo multiple reactions by changing the functionalization within an apparatus or an array of apparatus. Further, the apparatus described herein can combine a common highly-sensitive calorimetric transducer with integrated readout electronics which makes the fabrication and interrogation of an array of such apparatus cost-effective.

In certain examples the reaction between the sample species and the detector species may be assumed to be "ongoing", for example by continuing to supply the sample species over time (for example, over the timescale of a few seconds). In such a case, upon initially introducing the sample, the temperature of the pyroelectric layer will rise (assuming an exothermic reaction; the reverse is true of an endothermic reaction). Provided the sample is continually provided and the detector species are not all used up the temperature will remain at the higher level until the sample is removed from the vicinity of the reactant species (for example, by stopping supply of the sample and flushing and remaining sample away). The increase in temperature (and consequent current flow detected) is related to the nature of the reaction taking place, and thus the presence of a particular sample species may be determined.

In certain examples, the reaction between the sample species and the detector species may be assumed to be self-exhausting; that is, it occurs so quickly that all the sample species are consumed in a short timescale (for example, within the 10s or 100s of millisecond time frame). In such a case, upon initially introducing the sample, there will be a corresponding spike in temperature (again assuming an exothermic reaction) which will gradually decrease to substantially the initial pre-reaction temperature when the sample is consumed. The resulting temperature variation provides information on the nature of the reaction taking place (i.e. what is the sample species which is undergoing a reaction) from the height of the temperature spike. Also, the amount, or concentration, of the sample species present can be determined based on the time taken for the temperature to fall back down to substantially the pre-reaction temperature.

In certain examples, once the sample has reacted with the detector then the apparatus has been used and cannot be refreshed, e.g. if a DNA sample species reacts with a complementary DNA detector species. In such a case the apparatus is a one-use, disposable apparatus.

In certain examples, the apparatus may be used multiple times. For example, if the detector species is present as a thin (e.g., 100nm) layer on the first portion 104a of the floating gate 104, and if a reaction of sample with the detector species consumes the uppermost 1nm layer of detector species, then after a single use, there remain a further 99 uses to use up the remaining 99nm thickness of detector species material. The number of uses depends on the thickness of detector species material, the nature of the reaction taking place, and how much of the detector material is used up in each test.

To use the apparatus to detect sample species in solution, the solution may be applied to the apparatus, and after detection of the sample, the apparatus may be flushed e.g., with pure water, to remove any remaining sample solution and stop any further reactions. For example, an apparatus may have several different types of detector species present on the first portion 104a, 204a of the floating gate 104, 204, each type configured to react with a particular sample species. A first sample may be applied, measurements taken, and when the apparatus can be flushed/cleaned and dried ready for a subsequent application of a further sample solution.

There is no need for the use of complex microfluidics if the apparatus is used to detect sample species in solution (although in some examples such microfluidics may be used).

In some examples, the apparatus may be passivated (for example, by coating it in a thin (e.g., 10 nm) oxide coating) to isolate the metallic parts (such as the floating gate 104) from any sample solution applied to the apparatus. The thermal mass of e.g., oxide applied would be very small and would not substantially detrimentally affect the operation of the apparatus.

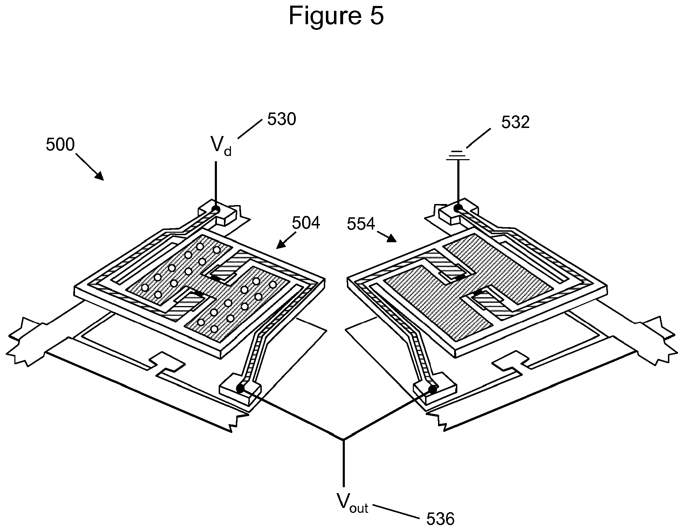

Figure 5 illustrates a further example apparatus which may be considered to provide a self-compensating architecture. A single apparatus 504 may be considered to act simply as a resistor whose resistance changes in response to a chemical or biological reaction (and an accompanying change in temperature). Two apparatus 504, 554 can then be combined as shown in Figure 5 to form a self-compensating potential divider 500. To achieve this, the two apparatus 504, 554 may be connected as shown in Figure 5, each having an electrode connected to a common output terminal Vₒᵤₜ 536, one 504 having a second electrode connected to an input terminal V_{d} 530, and the other 554 having a second electrode connected to ground 532. One apparatus 554 does not have any functionalisation of the floating gate.

The system in Figure 5 may be described as an apparatus 504 which is electrically connected to and thermally isolated from a further apparatus 554 apart from the at least first portion of the floating gate of the further apparatus 554 not being functionalized; the apparatus 504 and further apparatus 554 together being configured to form a potential divider 500.

Absent any stimulus/sample molecules/reaction, both apparatus 504, 554 offer the same resistance (within the fabrication tolerance), so the signal Vₒᵤₜ is roughly V_{d}/2. Should there be any uncontrolled source of heat from the environment (air or water convection, impinging photons, etc.), both apparatus 504, 554 increase their temperature by the same amount because they have the same absorption and the same thermal mass. Hence, since both apparatus' resistance is changing by the same amount, the divider 500 is still symmetrical and no change in signal (Vₒᵤₜ) is detected. However, if some heat is also coming from a reaction taking place on one apparatus 504 due to functionalisation of that apparatus' 504 floating gate (but is not taking place of the other apparatus 554 as there is no functionalisation here) this heat located on one apparatus 504 only will cause a temperature imbalance between the two apparatus 504, 554, and consequently an asymmetry in the resistance of the two apparatus 504, 554, and thus a change in the output signal Vₒᵤₜ. In essence, this architecture gives a differential response which is only dependent on the reaction heat, and the contribution of any other heat source (background noise) is filtered out. Note that the two apparatus 504, 554 must be fabricated on independent and isolated apparatus, or the extra heat produced at the functionalized apparatus 504 may quickly spread to the other apparatus 554 and bring the whole divider 500 into thermal equilibrium, suppressing any output Vₒᵤₜ. For this architecture, the integration of a two dimensional conductive channel amplifier within individual apparatus is of notable benefit. This is because one can place one graphene channel per pixel, and you need 2 FETs to realise this self-compensating apparatus. If the FETs could not be integrated (no graphene), the external wiring would become too cumbersome for an array, and would also increase the parasitic capacitance limiting the gain.

The abovedescribed apparatus may be considered to act as a passive sensor for which the reaction or event to be detected taking place on the functionalised floating gate offers sufficient thermal energy to activate the transducer and allow a current to be detected, the current being associated with the change in temperature taking place due to the reaction. There may be cases where the reaction under scrutiny offers too little thermal energy (or no energy at all) to perturb the thermal state of the apparatus in a measurable way. In these cases, the reaction or binding event has taken place on the functionalized pad, but the signal Vₒᵤₜ has not significantly varied to an amount which allows the temperature change of the reaction to be identified. However, because a reaction has taken place, the coverage of the functionalized floating gate pad has indeed changed (in case of a positive test, it is now covered with the analyte) and this can change the properties of the apparatus by, for example, changing the thermal mass of the apparatus.

These changes can then be probed by actively reading the optical properties of the system. Namely, the reaction apparatus 504 and the control apparatus 554 can both be illuminated by a controlled source of photons, with the aim of delivering some heat to both apparatus 504, 554. With the assumption that, before the binding event/reaction, the absorption of both apparatus 504, 554 was identical (or, in any case, known), if the presence of the analyte/sample species has somewhat changed the absorption of the functionalized apparatus 504 then a temperature imbalance will arise. Because there is control over the source of heat (the illuminating photons), it can be made arbitrarily intense to match the sensitivity of the apparatus 504, 554. In the divider geometry of Figure 5, any uniform heating is cancelled out, and only the differential reading carries the fingerprint of the asymmetry generated by the binding event/reaction.

Active optical reading may be based on reflectivity only. Assuming the floating gate is made out of a reflecting material such as gold, the presence of the analyte/sample species on top of the floating gate will make that floating gate a less efficient mirror. Hence, heat delivery to the floating gate is increased for a wide range of wavelengths. A more sophisticated implementation could exploit the specific absorption resonances of the analyte/sample molecules, so external illumination at selected wavelengths can be used to interrogate the system more accurately. That is, the controlled photon source may be configured to provide photons of a wavelength corresponding to an expected absorption resonance of a specific detected species. A change in thermal mass may also be detectable due to the presence of sample species on one of the apparatus 504.

There are various filters which can used for such implementations. The apparatus may in some examples be coated with one or more specific filters for specific selectivity and coatings can be used for each series of devices arrangement for specific detection in order to introduce spectral selectivity. Such filters may also filter wavelengths that might not be spectrally sensitive to the analyte/sample of interest. Thus the apparatus may further comprise a filter coating configured to allow one or more specific wavelengths of light from the controlled photon source to reach the specific species.

Overall, apparatus described herein may allow for different levels of sensing and signal processing alongside relatively straightforward integration. If using graphene as the two dimensional conductive channel, the excellent electrical properties and well understood manipulation of graphene materials allow exploitation of various key materials (thin-film crystals, polymers, 2D materials) as pyroelectric layers which may be chosen for their strong polarization response.

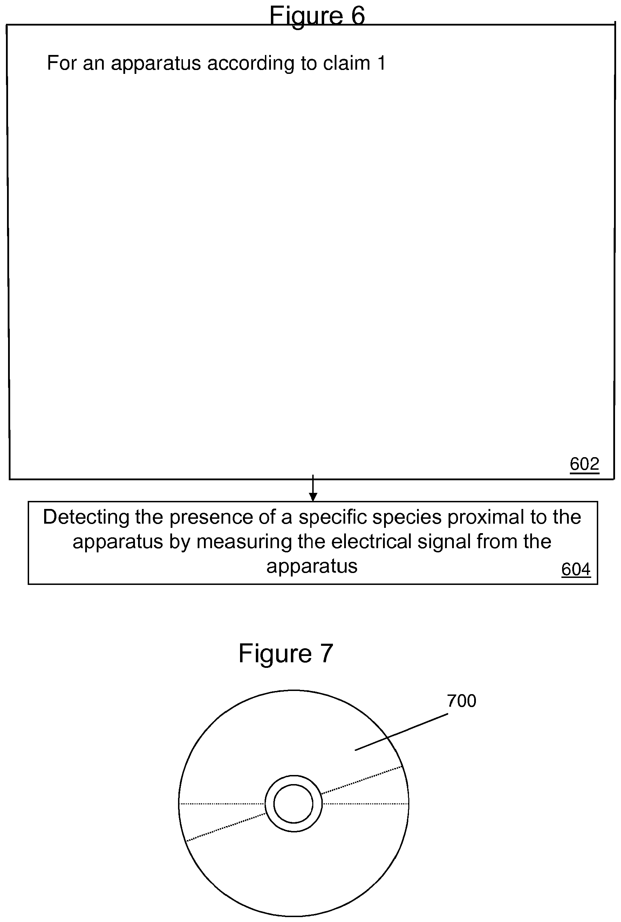

Figure 6 shows schematically the main step of a method of detecting the presence of a specific species proximal to an apparatus by measuring the electrical signal from the apparatus 604, wherein the apparatus comprises a pyroelectric layer, a two dimensional conductive channel and a floating gate, the apparatus configured such that the pyroelectric layer is capacitively configured with respect to each of the two dimensional conductive channel and the floating gate so that the two dimensional conductive channel and the floating gate can each act as respective capacitive plates for each respective, electrically connected, portion of the pyroelectric layer, the respective portions of the pyroelectric layer themselves configured to act as corresponding capacitive plates, the floating gate comprising electrically connected first and second portions, the first portion of the floating gate being in thermal proximity to the pyroelectric layer, the second portion configured to overlie and gate flow of electrical charge through the two dimensional conductive channel by charge in the second portion, wherein at least the first portion is functionalised to detect one or more proximal specific species, the detection of which gives rise to heat flow to or from the thermally proximal pyroelectric layer to allow the pyroelectric layer to generate an electrical signal dependent upon one or more of the presence and amount of the specific detected species 602.

Figure 7 illustrates schematically a computer/processor readable medium 700 providing a computer program. The computer program may comprise computer code configured to perform, control or enable at least the method step 602 of Figure 6. In this example, the computer/processor readable medium 700 is a disc such as a digital versatile disc (DVD) or a compact disc (CD). In other examples not according to the invention, the computer/processor readable medium 700 may be any medium that has been programmed in such a way as to carry out an inventive function. The computer/processor readable medium 700 may be a removable memory device such as a memory stick or memory card (SD, mini SD, micro SD or nano SD).

Other embodiments depicted in the figures have been provided with reference numerals that correspond to similar features of earlier described embodiments. For example, feature number 1 can also correspond to numbers 101, 201, 301 etc. These numbered features may appear in the figures but may not have been directly referred to within the description of these particular embodiments. These have still been provided in the figures to aid understanding of the further embodiments, particularly in relation to the features of similar earlier described embodiments.

It will be appreciated to the skilled reader that any mentioned apparatus/device and/or other features of particular mentioned apparatus/device may be provided by apparatus arranged such that they become configured to carry out the desired operations only when enabled, e.g. switched on, or the like. In such cases, they may not necessarily have the appropriate software loaded into the active memory in the non-enabled (e.g. switched off state) and only load the appropriate software in the enabled (e.g. on state). The apparatus may comprise hardware circuitry and/or firmware. The apparatus may comprise software loaded onto memory. Such software/computer programs may be recorded on the same memory/processor/functional units and/or on one or more memories/processors/functional units.

In some embodiments, a particular mentioned apparatus/device may be pre-programmed with the appropriate software to carry out desired operations, and wherein the appropriate software can be enabled for use by a user downloading a "key", for example, to unlock/enable the software and its associated functionality. Advantages associated with such embodiments can include a reduced requirement to download data when further functionality is required for a device, and this can be useful in examples where a device is perceived to have sufficient capacity to store such pre-programmed software for functionality that may not be enabled by a user.

It will be appreciated that any mentioned apparatus/circuitry/elements/processor may have other functions in addition to the mentioned functions, and that these functions may be performed by the same apparatus/circuitry/elements/processor. One or more disclosed aspects may encompass the electronic distribution of associated computer programs and computer programs (which may be source/transport encoded) recorded on an appropriate carrier (e.g. memory, signal).

It will be appreciated that any "computer" described herein can comprise a collection of one or more individual processors/processing elements that may or may not be located on the same circuit board, or the same region/position of a circuit board or even the same device. In some embodiments one or more of any mentioned processors may be distributed over a plurality of devices. The same or different processor/processing elements may perform one or more functions described herein.

With reference to any discussion of any mentioned computer and/or processor and memory (e.g. including ROM, CD-ROM etc), these may comprise a computer processor, Application Specific Integrated Circuit (ASIC), field-programmable gate array (FPGA), and/or other hardware components that have been programmed in such a way to carry out the inventive function.

## Claims

1. An apparatus comprising a pyroelectric layer (102, 202), a two dimensional conductive channel (114, 214) and a floating gate (104, 204), the apparatus configured such that the pyroelectric layer (102, 202) is capacitively configured with respect to each of the two dimensional conductive channel (114, 214) and the floating gate (104, 204) so that the two dimensional conductive channel (114, 214) and the floating gate (104, 204) can each act as respective capacitive plates for each respective, electrically connected, first (102a, 202a) and second (102b, 202b) portions of the pyroelectric layer (102, 202), the respective first (102a, 202a) and second (102b, 202b) portions of the pyroelectric layer (102, 202) themselves configured to act as corresponding capacitive plates;
the floating gate (104, 204) comprising electrically connected first (104a, 204a) and second (104b, 204b) portions , the first portion (104a, 204a) of the floating gate (104, 204) being in thermal proximity to the first portion (102a, 202a) of the pyroelectric layer (102, 202), the second portion (104b, 204b) of the floating gate (104, 204) configured to overlie and gate flow of electrical charge through the two dimensional conductive channel (114, 214) by charge in the second portion (104b, 204b) of the floating gate (104, 204), wherein a dielectric layer (112, 212) is located between the two dimensional conductive channel (114, 214) and the second portion (104b, 204b) of the floating gate (104, 204), and
wherein at least the first portion (104a, 204a) of the floating gate (104, 204) is functionalised to detect one or more proximal specific species, the detection of which gives rise to heat flow to or from the thermally proximal pyroelectric layer (102, 202) to allow the pyroelectric layer (102, 202) to generate an electrical signal dependent upon one or more of the presence and amount of the specific detected species.

2. The apparatus according to claim 1, wherein the pyroelectric layer (102, 202) is supported by two supporting legs at opposite sides of the pyroelectric layer (102, 202) to thermally isolate the pyroelectric layer (102, 202).

3. The apparatus according to claim 1, wherein the apparatus further comprises a border element located at the periphery of the pyroelectric layer (102, 202), the border element configured to contain a liquid sample deposited on the apparatus.

4. The apparatus according to claim 1, wherein the two dimensional conductive channel (114, 214) comprises one or more of: graphene; graphene related materials (GRM); reduced graphene oxide; MOS_{2;} phosphorene; silicon nanowires; carbon nanotubes and also hybrid structures containing a combination of materials.

5. The apparatus according to claim 1, wherein the at least first portion (104a, 204a) of the floating gate (104, 204) is functionalised by one or more of: an enzyme, cholesterol oxidase, chymotrypsin, glucose oxidase, catalase, penicillinase, trypsin, amylase, invertase, urease, and uricase.

6. The apparatus according to claim 1, wherein the first portion (104a, 204a) of the floating gate (104, 204) is functionalised to react with a corresponding sample species comprising one or more of: a protein, cholesterol, an ester, glucose, hydrogen peroxide, penicillin, a peptide, starch, sucrose, urea, and uric acid.

7. The apparatus according to claim 1, wherein the first (102a, 202a) and second (102b, 202b) portions of the pyroelectric layer (102, 202) are:
first (104a, 204a) and second (104b, 204b) portions of a common pyroelectric layer (102, 202); or
respective separate electrically connected first and second pyroelectric layer (102, 202) elements.

8. The apparatus according to claim 1, wherein the area of the first portion (104a, 204a) of the floating gate (104, 204) is one or more of: two times, three times, four times, five times, ten times, 20 times, 30 times, 50 times, 100 times and more than 100 times the area of the second portion (104b, 204b) of the floating gate (104, 204).

9. The apparatus according to claim 1, wherein at least the first portion (104a, 204a) of the floating gate (104, 204) is functionalised by a proximal detector layer; and wherein the detector layer is configured to allow a plurality of reactions to take place with corresponding sample species.

10. The apparatus according to claim 1, wherein the apparatus is electrically connected to and thermally isolated from a further apparatus according to claim 1 apart from the at least first portion (104a, 204a) of the floating gate (104, 204) of the further apparatus not being functionalized; the apparatus and further apparatus together are configured to form a potential divider.

11. The apparatus according to claim 1, wherein the floating gate is made out of a reflecting material and the apparatus further comprises a controlled photon source that is used to illuminate the apparatus.

12. A method for detecting the presence of a specific species proximal to an apparatus by measuring the electrical signal from the apparatus,
the apparatus comprising a pyroelectric layer (102, 202), a two dimensional conductive channel (114, 214) and a floating gate (104, 204), the apparatus configured such that the pyroelectric layer (102, 202) is capacitively configured with respect to each of the two dimensional conductive channel (114, 214) and the floating gate (104, 204) so that the two dimensional conductive channel (114, 214) and the floating gate (104, 204) can each act as respective capacitive plates for each respective, electrically connected, first (102a, 202a) and second (102b, 202b) portions of the pyroelectric layer (102, 202), the respective first (104a, 204a) and second (104b, 204b) portions of the pyroelectric layer (102, 202) themselves configured to act as corresponding capacitive plates, the floating gate (104, 204) comprising electrically connected first (104a, 204a) and second (104b, 204b) portions , the first portion (104a, 204a) of the floating gate (104, 204) being in thermal proximity to the first portion (102a, 202a) of the pyroelectric layer (102, 202), the second portion (104b, 204b) of the floating gate (104, 204) configured to overlie and gate flow of electrical charge through the two dimensional conductive channel (114, 214) by charge in the second portion (104b, 204b) of the floating gate (104, 204), wherein a dielectric layer (112, 212) is located between the two dimensional conductive channel (114, 214) and the second portion (104b, 204b) of the floating gate (104, 204), and wherein at least the first portion (104a, 204a) of the floating gate (104, 204) is functionalised to detect one or more proximal specific species, the detection of which gives rise to heat flow to or from the thermally proximal pyroelectric layer (102, 202) to allow the pyroelectric layer (102, 202) to generate an electrical signal dependent upon one or more of the presence and amount of the specific detected species.

## Patentansprüche

1. Vorrichtung, die eine pyroelektrische Schicht (102, 202), einen zweidimensionalen leitenden Kanal (114, 214) und ein Floating-Gate (104, 204) umfasst, wobei die Vorrichtung so eingerichtet ist, dass die pyroelektrische Schicht (102, 202) sowohl in Bezug auf den zweidimensionalen leitenden Kanal (114, 214) als auch in Bezug auf das Floating-Gate (104, 204) kapazitiv eingerichtet ist, so dass der zweidimensionale leitende Kanal (114, 214) und das Floating-Gate (104, 204) jeweils als entsprechende kapazitive Platten für den entsprechenden elektrisch verbundenen ersten (102a, 202a) und zweiten (102b, 202b) Teilabschnitt der pyroelektrischen Schicht (102, 202) fungieren können, wobei der entsprechende erste (102a, 202a) beziehungsweise zweite (102b, 202b) Teilabschnitt der pyroelektrischen Schicht (102, 202) selbst jeweils dazu eingerichtet ist, als entsprechende kapazitive Platte zu fungieren;
wobei das Floating-Gate (104, 204) einen elektrisch verbundenen ersten (104a, 204a) und zweiten (104b, 204b) Teilabschnitt umfasst, der erste Teilabschnitt (104a, 204a) des Floating-Gates (104, 204) sich in thermischer Nähe zum ersten Teilabschnitt (102a, 202a) der pyroelektrischen Schicht (102, 202) befindet, der zweite Teilabschnitt (104b, 204b) des Floating-Gates (104, 204) so eingerichtet ist, dass er oberhalb liegt und einen elektrischen Ladungsfluss über den zweidimensionalen leitenden Kanal (114, 214) durch Ladung im zweiten Teilabschnitt (104b, 204b) des Floating-Gates (104, 204) steuert, wobei eine dielektrische Schicht (112, 212) zwischen dem zweidimensionalen leitenden Kanal (114, 214) und dem zweiten Teilabschnitt (104b, 204b) des Floating-Gates (104, 204) angeordnet ist, und
wobei mindestens der erste Teilabschnitt (104a, 204a) des Floating-Gates (104, 204) so funktionalisiert ist, dass er eine oder mehrere proximale spezifische Spezies detektiert, deren Detektion einen Wärmestrom zu der oder von der thermisch proximalen pyroelektrischen Schicht (102, 202) hervorbringt, um zu ermöglichen, dass die pyroelektrische Schicht (102, 202) ein elektrisches Signal in Abhängigkeit von dem Vorhandensein und/oder der Menge der spezifischen detektierten Spezies erzeugt.

2. Vorrichtung nach Anspruch 1, wobei die pyroelektrische Schicht (102, 202) von zwei Stützfüßen an gegenüberliegenden Seiten der pyroelektrischen Schicht (102, 202) getragen wird, um die pyroelektrische Schicht (102, 202) thermisch zu isolieren.

3. Vorrichtung nach Anspruch 1, wobei die Vorrichtung ferner ein Begrenzungselement umfasst, das an der Peripherie der pyroelektrischen Schicht (102, 202) angeordnet ist, wobei das Begrenzungselement so eingerichtet ist, dass es eine auf die Vorrichtung aufgebrachte Flüssigkeitsprobe eingrenzt.

4. Vorrichtung nach Anspruch 1, wobei der zweidimensionale leitende Kanal (114, 214) eines oder mehreres von Folgendem enthält: Graphen; Graphen-verwandte Materialien (GRM); reduziertes Graphenoxid; MoS₂; Phosphoren; Silizium-Nanodrähte; Kohlenstoff-Nanoröhren und auch hybride Strukturen, die eine Kombination von Materialien enthalten.

5. Vorrichtung nach Anspruch 1, wobei mindestens der erste Teilabschnitt (104a, 204a) des Floating-Gates (104, 204) durch eines oder mehrere von Folgendem funktionalisiert wird: ein Enzym, Cholesteroloxidase, Chymotrypsin, Glukoseoxidase, Katalase, Penicillinase, Trypsin, Amylase, Invertase, Urease und Uricase.

6. Vorrichtung nach Anspruch 1, wobei der erste Teilabschnitt (104a, 204a) des Floating-Gates (104, 204) funktionalisiert wird, um mit einer entsprechenden Probespezies zu reagieren, die eines oder mehreres von Folgendem umfasst: ein Protein, Cholesterol, einen Ester, Glukose, Wasserstoffperoxid, Penicillin, ein Peptid, Stärke, Saccharose, Harnstoff und Harnsäure.

7. Vorrichtung nach Anspruch 1, wobei der erste (102a, 202a) und der zweite (102b, 202b) Teilabschnitt der pyroelektrischen Schicht (102, 202)
ein erster (104a, 204a) und ein zweiter (104b, 204b) Teilabschnitt einer gemeinsamen pyroelektrischen Schicht (102, 202) sind; oder
entsprechende separate elektrisch verbundene erste und zweite Elemente der pyroelektrischen Schicht (102, 202) sind.

8. Vorrichtung nach Anspruch 1, wobei die Fläche des ersten Teilabschnitts (104a, 204a) des Floating-Gates (104, 204) eines oder mehreres von zwei Mal, drei Mal, vier Mal, fünf Mal, zehn Mal, 20 Mal, 30 Mal, 50 Mal, 100 Mal und mehr als 100 Mal so groß wie die Fläche des zweiten Teilabschnitts (104b, 204b) des Floating-Gates (104, 204) ist.

9. Vorrichtung nach Anspruch 1, wobei mindestens der erste Teilabschnitt (104a, 204a) des Floating-Gates (104, 204) durch eine proximale Detektorschicht funktionalisiert wird; und wobei die Detektorschicht so eingerichtet ist, dass mehrere Reaktionen mit entsprechenden Probespezies stattfinden können.

10. Vorrichtung nach Anspruch 1, wobei die Vorrichtung mit einer weiteren Vorrichtung nach Anspruch 1 elektrisch verbunden und gegen diese thermisch isoliert ist, außer dass mindestens der erste Teilabschnitt (104a, 204a) des Floating-Gates (104, 204) der weiteren Vorrichtung nicht funktionalisiert ist; wobei die Vorrichtung und die weitere Vorrichtung zusammen so eingerichtet sind, dass sie einen Potentialteiler bilden.

11. Vorrichtung nach Anspruch 1, wobei das Floating-Gate aus einem reflektierenden Material gefertigt ist und die Vorrichtung ferner eine gesteuerte Photonenquelle umfasst, die zur Beleuchtung der Vorrichtung verwendet wird.

12. Verfahren zum Detektieren des Vorhandenseins einer spezifischen Spezies proximal zu einer Vorrichtung durch Messen des elektrischen Signals aus der Vorrichtung,
wobei die Vorrichtung eine pyroelektrische Schicht (102, 202), einen zweidimensionalen leitenden Kanal (114, 214) und ein Floating-Gate (104, 204) umfasst, wobei die Vorrichtung so eingerichtet ist, dass die pyroelektrische Schicht (102, 202) sowohl in Bezug auf den zweidimensionalen leitenden Kanal (114, 214) als auch in Bezug auf das Floating-Gate (104, 204) kapazitiv eingerichtet ist, so dass der zweidimensionale leitende Kanal (114, 214) und das Floating-Gate (104, 204) jeweils als entsprechende kapazitive Platten für den entsprechenden, elektrisch verbundenen, ersten (102a, 202a) und zweiten (102b, 202b) Teilabschnitt der pyroelektrischen Schicht (102, 202) fungieren können, wobei der entsprechende erste (104a, 204a) beziehungsweise zweite (104b, 204b) Teilabschnitt der pyroelektrischen Schicht (102, 202) selbst jeweils dazu eingerichtet ist, als entsprechende kapazitive Platte zu fungieren; wobei das Floating-Gate (104, 204) einen elektrisch verbundenen ersten (104a, 204a) und zweiten (104b, 204b) Teilabschnitt umfasst, der erste Teilabschnitt (104a, 204a) des Floating-Gates (104, 204) sich in thermischer Nähe zum ersten Teilabschnitt (102a, 202a) der pyroelektrischen Schicht (102, 202) befindet, der zweite Teilabschnitt (104b, 204b) des Floating-Gates (104, 204) so eingerichtet ist, dass er oberhalb liegt und einen elektrischen Ladungsfluss über den zweidimensionalen leitenden Kanal (114, 214) durch Ladung im zweiten Teilabschnitt (104b, 204b) des Floating-Gates (104, 204) steuert, wobei eine dielektrische Schicht (112, 212) zwischen dem zweidimensionalen leitenden Kanal (114, 214) und dem zweiten Teilabschnitt (104b, 204b) des Floating-Gates (104, 204) angeordnet ist, und wobei mindestens der erste Teilabschnitt (104a, 204a) des Floating-Gates (104, 204) so funktionalisiert ist, dass er eine oder mehrere proximale spezifische Spezies detektiert, deren Detektion einen Wärmefluss zu der oder von der thermisch proximalen pyroelektrischen Schicht (102, 202) hervorbringt, um zu ermöglichen, dass die pyroelektrische Schicht (102, 202) ein elektrisches Signal in Abhängigkeit von dem Vorhandensein und/oder der Menge der spezifischen detektierten Spezies erzeugt.

## Revendications

1. Appareil comprenant une couche pyroélectrique (102, 202), un canal conducteur bidimensionnel (114, 214) et une grille flottante (104, 204), ledit appareil étant configuré de façon à ce que la couche pyroélectrique (20) soit configurée de manière capacitive par rapport à chacun parmi le canal conducteur bidimensionnel (114, 214) et la grille flottante (104, 204) de telle sorte que tant le canal conducteur bidimensionnel (114, 214) que la grille flottante (104, 204) puissent agir comme plaques capacitives respectives pour chacune des première (102a, 202a) et deuxième (102b, 202b) parties électriquement connectées respectives de la couche pyroélectrique (102, 202), lesdites première (102a, 202a) et deuxième (102b, 202b) parties respectives de la couche pyroélectrique (102, 202) étant elles-mêmes configurées pour agir comme plaques capacitives correspondantes;
ladite grille flottante (104, 204) comprenant des première (104a, 204a) et deuxième (104b, 204b) parties électriquement connectées, la première partie (104a, 204a) de ladite grille flottante (104, 204) étant à proximité thermique par rapport à la première partie (102a, 202a) de la couche pyroélectrique (102, 202), la deuxième partie (104b, 204b) de ladite grille flottante (104, 204) étant configurée pour se superposer et contrôler un flux de charge électrique à travers le canal conducteur bidimensionnel (114, 214) par une charge dans la deuxième partie (104b, 204b) de la grille flottante (104, 204), une couche diélectrique (112, 212) étant disposée entre ledit canal conducteur bidimensionnel (114, 214) et la deuxième partie (104b, 204b) de ladite grille flottante (104, 204), et
au moins la première partie (104a, 204a) de ladite grille flottante (104, 204) étant fonctionnalisée pour détecter une ou plusieurs espèces spécifiques proximales dont la détection provoque un flux thermique vers ou depuis la couche pyroélectrique (102, 202) thermiquement proximale pour permette à la couche pyroélectrique (102, 202) de générer un signal électrique en fonction de l'un ou plusieurs parmi la présence et la quantité des espèces détectées spécifiques.

2. Appareil selon la revendication 1, dans lequel la couche pyroélectrique (102, 202) est appuyée sur deux supports d'appui sur des côtés opposés de la couche pyroélectrique (102, 202) pour isoler thermiquement la couche pyroélectrique (102, 202).

3. Appareil selon la revendication 1, dans lequel l'appareil comprend également un élément de barrière situé à la périphérie de la couche pyroélectrique (102, 202), ledit élément de barrière étant configuré pour contenir un échantillon liquide déposé sur l'appareil.

4. Appareil selon la revendication 1, dans lequel le canal conducteur bidimensionnel (114, 214) comprend l'un ou plusieurs parmi : le graphène; des matériaux associés au graphène (GRM); l'oxyde de graphène réduit; le MoS₂; le phosphorène; les nanofils de silicium; les nanotubes de carbone et également des structures hybrides contenant une combinaison de matériaux.

5. Appareil selon la revendication 1, dans lequel au moins ladite première partie (104a, 204a) de la grille flottante (104, 204) est fonctionnalisée par l'un ou plusieurs parmi : un enzyme, la cholestérol-oxydase, la chymotrypsine, la glucose-oxydase, la catalase, la pénicillinase, la trypsine, l'amylase, l'invertase, l'uréase et l'uricase.

6. Appareil selon la revendication 1, dans lequel la première partie (104a, 204a) de la grille flottante (104, 204) est fonctionnalisée pour réagir avec une espèce d'échantillon correspondante comprenant l'un ou plusieurs parmi : une protéine, le cholestérol, un ester, le glucose, le péroxyde d'hydrogène, la pénicilline, un peptide, l'amidon, le saccharose, l'urée et l'acide urique.

7. Appareil selon la revendication 1, dans lequel les première (102a, 202a) et deuxième (102b, 202b) parties de la couche pyroélectrique (102, 202) sont :
une première (104a, 204a) et une deuxième (104b, 204b) parties d'une couche pyroélectrique commune (102, 202) ; ou
des premier et deuxième éléments de couche pyroélectrique (102, 202) électriquement reliés séparés respectifs.

8. Appareil selon la revendication 1, dans lequel la superficie de la première partie (104a, 204a) de la grille flottante (104, 204) est l'un ou plusieurs de : deux fois, trois fois, quatre fois, cinq fois, dix fois, 20 fois, 30 fois, 50 fois, 100 fois et plus de 100 fois la superficie de la deuxième partie (104b, 204b) de la grille flottante (104, 204).

9. Appareil selon la revendication 1, dans lequel au moins la première portion (104a, 204a) de la grille flottante (104, 204) est fonctionnalisée par une couche de détecteur proximale; et la couche de détecteur est configurée pour autoriser une pluralité de réactions ayant lieu avec des espèces d'échantillon correspondantes.

10. Appareil selon la revendication 1, dans lequel l'appareil est électriquement relié à et thermiquement isolé par rapport à un autre appareil selon la revendication 1, sauf qu'au moins la première partie (104a, 204a) de la grille flottante (104, 204) de l'autre appareil n'est pas fonctionnalisée; ledit appareil et ledit autre appareil étant ensemble configurés pour former un diviseur de potentiel.

11. Appareil selon la revendication 1, dans lequel la grille flottante est faite à partir d'un matériau réfléchissant et l'appareil comprend également une source de photons contrôlée qui est utilisée pour illuminer l'appareil.

12. Procédé pour détecter la présence d'une espèce spécifique proximale par rapport à un appareil en mesurant le signal électrique venant de l'appareil,
ledit appareil comprenant une couche pyroélectrique (102, 202), un canal conducteur bidimensionnel (114, 214) et une grille flottante (104, 204), ledit appareil étant configuré de façon à ce que la couche pyroélectrique (102, 202) soit configurée de manière capacitive par rapport à chacun parmi le canal conducteur bidimensionnel (114, 214) et la grille flottante (104, 204) de telle sorte que tant le canal conducteur bidimensionnel (114, 214) que la grille flottante (104, 204) puissent agir comme plaques capacitives respectives pour chacune des première (102a, 202a) et deuxième (102b, 202b) parties électriquement connectées respectives de la couche pyroélectrique (102, 202), lesdites première (104a, 204a) et deuxième (104b, 204b) parties respectives de la couche pyroélectrique (102, 202) étant elles-mêmes configurées pour agir comme plaques capacitives correspondantes, ladite grille flottante (104, 204) comprenant des première (104a, 204a) et deuxième (104b, 204b) parties électriquement connectées, la première partie (104a, 204a) de ladite grille flottante (104, 204) étant à proximité thermique par rapport à la première partie (102a, 202a) de la couche pyroélectrique (102, 202), la deuxième partie (104b, 204b) de ladite grille flottante (104, 204) étant configurée pour se superposer et contrôler un flux de charge électrique à travers le canal conducteur bidimensionnel (114, 214) par une charge dans la deuxième partie (104b, 204b) de la grille flottante (104, 204), une couche diélectrique (112, 212) étant disposée entre ledit canal conducteur bidimensionnel (114, 214) et la deuxième partie (104b, 204b) de ladite grille flottante (104, 204), et au moins la première partie (104a, 204a) de ladite grille flottante (104, 204) étant fonctionnalisée pour détecter une ou plusieurs espèces spécifiques proximales dont la détection provoque un flux thermique vers ou depuis la couche pyroélectrique (102, 202) thermiquement proximale pour permette à la couche pyroélectrique (102, 202) de générer un signal électrique en fonction de l'un ou plusieurs parmi la présence et la quantité des espèces détectées spécifiques.
